(19) Europäisches Patentamt
European Patent Office
Office européen des brevets

(11) Veröffentlichungsnummer: **0 215 317 B1**

# (12) EUROPÄISCHE PATENTSCHRIFT

(45) Veröffentlichungstag der Patentschrift: **07.06.89**

(51) Int. Cl.⁴: **C 01 B 17/04**, B 01 D 53/36, B 01 J 23/74

(21) Anmeldenummer: **86111496.5**

(22) Anmeldetag: **19.08.86**

## (54) Verfahren zum Entfernen von Schwefelwasserstoff aus Abgasen.

(30) Priorität: **20.08.85 DE 3529665**

(43) Veröffentlichungstag der Anmeldung: **25.03.87 Patentblatt 87/13**

(45) Bekanntmachung des Hinweises auf die Patenterteilung: **07.06.89 Patentblatt 89/23**

(84) Benannte Vertragsstaaten: **DE FR GB**

(56) Entgegenhaltungen:
**EP-A- 0 078 690**
**FR-A- 2 511 663**
**GB-A- 2 087 373**
**CHEMICAL ABSTRACTS, Band 96, Nr. 16, 19. April 1982, Seite 167, Zusammenfassung Nr. 125534r, Columbus, Ohio, US; & JP-A-81 169 106**
**CHEMICAL ABSTRACTS, Band 95, Nr. 4, 27. Juli 1981, Seite 396, Zusammenfassung Nr.31128p, Columbus, Ohio, US; SU-A-825 131**

(73) Patentinhaber: **METALLGESELLSCHAFT AG**
**Reuterweg 14 Postfach 3724**
**D-6000 Frankfurt/M.1 (DE)**

(72) Erfinder: **Ruhl, Emil, Dr.**
**Hügelstrasse 181**
**D-6000 Frankfurt am Main 1 (DE)**
Erfinder: **Stetzer, Klaus**
**Buchwaldstrasse 31**
**D-6072 Dreieich (DE)**

(74) Vertreter: **Rieger, Harald, Dr.**
**Reuterweg 14**
**D-6000 Frankfurt am Main (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 215 317 B1

Jouve, 18, rue St-Denis, 75001 Paris, France

## Beschreibung

Die Erfindung betrifft ein Verfahren zum Entfernen von Schwefelwasserstoff aus einem Abgas durch Umsetzen mit $SO_2$ unter Bildung von Schwefel, wobei das Abgas über einen regenerierbaren Katalysator geleitet und der gebildete Schwefel vom Katalysator adsorbiert wird.

Im deutschen Patent 2 617 649 und dem dazu korrespondierenden britischen Patent 1 529 537 wird ein solches Verfahren beschrieben, wobei der Katalysator im wesentlichen aus Aluminiumoxid besteht, das mit Eisen, Nickel und/oder Kobalt in einer Beladung von 2 bis 10 Gew.% imprägniert ist. Die vorliegende Erfindung stellt eine Weiterentwicklung dieses bekannten Verfahrens dar, wobei die Aufgabe gestellt ist, einen Katalysator zu verwenden, der wesentlich langsamer deaktiviert als der bisher verwendete Katalysator.

Die Aufgabe wird erfindungsgemäß dadurch gelöst, daß man als Katalysator Titandioxid mit einer Oberfläche nach BET von mindestens 50 $m^2/g$ verwendet, wobei der Katalysator als Imprägnierung 0,3 bis 5 Gew.% an mindestens einem der Metalle Nickel, Eisen oder Kobalt enthält und das Abgas bei Temperaturen im Bereich von 30 bis 150 °C über den Katalysator geleitet wird. Das Verfahren arbeitet adiabatisch, wobei der Katalysator in einer Schüttung angeordnet ist.

Der erfindungsgemäß verwendete Katalysator ist an sich gemäß FR-A-25 11 663 bekannt, wo er zur $H_2S$-Oxydation zu im wesentlichen $SO_2$ bei Temperaturen, die über den Taupunkt von Schwefel liegen, eingesetzt wird.

Sowohl beim erfindungsgemäß verwendeten wie beim bekannten $Al_2O_3$-Katalysator erfolgt die Umsetzung des Schwefelwasserstoffs nach der bekannten Gleichung

$$2H_2S + SO_2 \rightarrow 3S + 2H_2O,$$

wobei $H_2S$ vollständig in Elementarschwefel umgewandelt wird, der als Beladung auf dem Katalysator verbleibt. Üblicherweise wird der bekannte und auch der erfindungsgemäße Katalysator im Festbett angewandt, durch welches man das zu behandelnde Abgas leitet. Dabei zeigt es sich, daß der bekannte $Al_2O_3$-Katalysator bei Anwesenheit von Sauerstoff-Spuren im Gas mit wachsender Schwefelbeladung relativ rasch deaktiviert, so daß die Umsetzung von $H_2S$ mit $SO_2$ zu Elementarschwefel immer weniger vollständig verläuft und das abströmende Abgas einen wachsenden $H_2S$- und $SO_2$-Gehalt behält. Der erfindungsgemäße $TiO_2$-Katalysator deaktiviert viel langsamer, wie Messungen zeigen, die nachfolgend beschrieben werden. Die Ursache dieser Verbesserung dürfte darin liegen, daß beim bekannten $Al_2O_3$-Katalysator Sauerstoff mit den Schwefelverbindungen teilweise auch zu Sulfat reagiert, welches den Katalysator deaktiviert. Demgegenüber neigt der erfindungsgemäße Katalysator nicht oder kaum zur Sulfatbildung.

Beim erfindungsgemäßen Verfahren kann das Abgas neben $H_2S$ und $SO_2$ auch COS mit einem Anteil von 0,01 bis 0,5 Vol.% enthalten, welches am Katalysator durch Hydrolyse zu $CO_2$ und $H_2S$ umgewandelt wird. Hierbei reagiert $COS + H_2O$ zu $H_2S + CO_2$ weitgehend unbehindert, weil am Katalysator kein Sulfat gebildet wird. Das bei der Hydrolyse entstehende $CO_2$ stört die weiteren Umsetzungen nicht und geht in das behandelte Abgas über.

Das zu behandelnde Abgas kann $H_2S$ und $SO_2$ in breitem Konzentrationsbereich enthalten, wobei die Begrenzung für das Verfahren in der bei der katalytischen Umsetzung entstehenden Reaktionswärme liegt. Vorzugsweise weist das Abgas $H_2S$-Konzentrationen im Bereich von 0,1 bis 3 Vol.% und $SO_2$-Konzentrationen im Bereich von 0,05 bis 1,5 Vol.% auf.

Es wurde gefunden, daß der vorzugsweise Bereich für die Imprägnierung des $TiO_2$-Katalysators mit Nickel, Eisen oder Kobalt bei 1 bis 3 Gew.% liegt. Als wirksamstes Imprägnierungsmetall hat sich Nickel erwiesen.

Für die Herstellung des imprägnierten Katalysators kann folgendes Verfahren angewandt werden :

Formkörper aus $TiO_2$ mit einer Oberfläche von mindestens 50 $m^2/g$ (nach BET) werden mit einer wäßrigen Lösung eines oder mehrerer geeigneter Salze, z. B. Sulfate, der Imprägnierungsmetalle, z. B. Nickelsulfat, getränkt, bei etwa 150 °C getrocknet und bei etwa 350 °C im Luftstrom kalziniert. Beim Gebrauch des Katalysators wandelt sich die auf dem Träger in Form von Oxid oder Metallsalz befindliche Imprägnierung sofort in Metallsulfid um, wodurch die Wirksamkeit des Katalysators jedoch nicht beeinträchtigt wird.

Für die Behandlung des Abgases wird der $TiO_2$-Katalysator in bekannter, bereits im deutschen Patent 2 617 649 beschriebener Weise in mindestens zwei Betten bereitgestellt, wobei ein Bett der Abgasbehandlung dient, während das zweite, mit Schwefel beladene Katalysatorbett zum Regenerieren mit einem Inertgas mit Temperaturen im Bereich von 250 bis 400 °C behandelt wird. Als heißes Inertgas kann vorzugsweise behandeltes Abgas verwendet werden. Ist die Regenerierung beendet, wird das Katalysatorbett nach Kühlung wieder zur Abgasbehandlung eingesetzt, während das andere, inzwischen beladene Bett regeneriert wird.

Die Abgasbehandlung wird bei Temperaturen im Bereich von 30 bis 150 °C und vorzugsweise 100 bis 150 °C durchgeführt. Dabei liegen die Eintrittstemperaturen bei 30 bis 130 °C und vorzugsweise 80 bis 120 °C. Der erfindungsgemäße Katalysator hat eine spezifische Oberfläche nach BET im Bereich von 50

bis 250 $m^2/g$. Das $TiO_2$ wird üblicherweise zunächst als Granulat oder Pellets, die z. B. stranggepreßt sein können, bereitgestellt und dann in der bereits beschriebenen Weise imprägniert. Der Sauerstoffgehalt, der im zu behandelnden Abgas an sich stört, kann bis zu 0,3 Vol.% betragen, ohne daß ein merkbarer Umsatzrückgang eintritt.

Vergleichsversuche :

Vergleichsversuche wurden einerseits mit einem bekannten $Al_2O_3$-Katalysator (Katalysator A) und andererseits mit einem erfindungsgemäßen $TiO_2$-Katalysator (Katalysator B) durchgeführt. Beide Katalysatoren waren mit 1 Gew.% Nickel imprägniert, die BET-Oberfläche des Katalysators A betrug 320 $m^2/g$, die das Katalysators B 120 $m^2/g$. Die Versuche wurden mit einem Gas der Zusammensetzung

| | |
|---|---|
| $H_2S$ | 1,5 Vol.% |
| $SO_2$ | 0,75 Vol.% |
| $CO_2$ | 97,65 Vol.% |
| $O_2$ | 0,1 Vol.% |

durchgeführt, das Katalysatorbett hatte eine Schütthöhe von 100 cm, die Temperatur im Eintrittsbereich des Bettes lag bei 115 °C und die im Austrittsbereich bei 130 °C, die Verweilzeit des Gases im Katalysatorbett betrug 3 Sekunden.

Festgestellt wurde der Umsetzungsgrad U in Abhängigkeit von der Schwefelbeladung S in Gewichtsprozent des jeweiligen Katalysators. U berechnet sich aus dem Gehalt an $H_2S$ plus $SO_2$ im den Katalysator verlassenden Abgas gegenüber dem in den Katalysator eintretenden Abgas. Aus der nachfolgenden Tabelle der Meßwerte ist klar zu sehen, daß der $TiO_2$-Katalysator (Kat. B) auch bei beträchtlicher Schwefel-Beladung für einen gegenüber dem $Al_2O_3$-Katalysator (Kat. A) viel höheren Umsetzungsgrad sorgt. Demgemäß bleibt der $TiO_2$-Katalysator viel länger einsatzfähig als der bekannte $Al_2O_3$-Katalysator.

Meßwerte :

| S-Beladung(Gew.%) | U(%) für Kat.A | U(%) für Kat.B |
|---|---|---|
| 5 | 98,7 | 99,8 |
| 10 | 98,5 | 99,8 |
| 15 | 98,2 | 99,8 |
| 20 | 97,2 | 99,8 |
| 25 | 96,5 | 99,8 |
| 30 | 93,3 | 99,5 |
| 35 | 90,5 | 99,2 |
| 40 | 86,1 | 99,0 |
| 43 | 82,2 | 98,8 |

**Patentansprüche**

1. Verfahren zum Entfernen von Schwefelwasserstoff aus einem Abgas durch Umsetzen mit $SO_2$ unter Bildung von Schwefel, wobei das Abgas über einen regenerierbaren Katalysator geleitet und der gebildete Schwefel vom Katalysator adsorbiert wird, dadurch gekennzeichnet, daß man als Katalysator Titandioxid mit einer Oberfläche nach BET von mindestens 50 $m^2/g$ verwendet, wobei der Katalysator als Imprägnierung 0,3 bis 5 Gew.% an mindestens einem der Metalle Nickel, Eisen oder Kobalt enthält und das Abgas bei Temperaturen im Bereich von 30 bis 150 °C über den Katalysator geleitet wird.

2. Verfahren nach Anspruch 1, dadurch gekennzeichnet, daß das Abgas neben $H_2S$ und $SO_2$ auch COS mit einem Anteil von 0,01 bis 0,5 Vol.% enthält, welches am Katalysator durch Hydrolyse zu $CO_2$ und $H_2S$ umgewandelt wird.

3. Verfahren nach Anspruch 1 oder 2, dadurch gekennzeichnet, daß der Katalysator als Imprägnierung Nickel enthält.

4. Verfahren nach Anspruch 1 oder einem der folgenden, dadurch gekennzeichnet, daß der mit Schwefel beladene Katalysator zum Regenerieren mit Inertgas mit Temperaturen im Bereich von 250 bis 400 °C behandelt wird.

5. Verfahren nach Anspruch 4, dadurch gekennzeichnet, daß als heißes Inertgas gereinigtes Abgas verwendet wird.

6. Verfahren nach Anspruch 1 oder einem der folgenden, dadurch gekennzeichnet, daß ein Katalysator verwendet wird, dessen Imprägnierung mit einer wäßrigen Metallsalzlösung erzeugt wurde.

## Claims

1. Process for removing hydrogen sulphide from an exhaust gas by reacting with $SO_2$ involving the formation of sulphur, the exhaust gas being passed over a regenerable catalyst and the resulting sulphur being adsorbed by the catalyst, characterised in that titanium dioxid with a BET surface area of at least 50 $m^2/g$ is used as the catalyst, the catalyst containing as an impregnation 0.3 to 5 % weight of at least one of the metals nickel, iron or cobalt and the exhaust gas being passed over the catalyst at temperatures in the range of 30 to 150 °C.

2. Process according to Claim 1, characterised in that as well as $H_2S$ and $SO_2$ the exhaust gas also contains COS with a proportion of 0.01 to 0.5 % volume which is converted at the catalyst into $CO_2$ and $H_2S$ by hydrolysis.

3. Process according to Claim 1 or 2, characterised in that the catalyst contains nickel as an impregnation.

4. Process according to Claim 1 or one of the following, characterised in that for regeneration the sulphur-laden catalyst is treated with inert gas at temperatures in the range of 250 to 400 °C.

5. Process according to Claim 4, characterised in that purified exhaust gas is used as the hot inert gas.

6. Process according to Claim 1 or one of the following, characterised in that a catalyst is used the impregnation of which was produced with an aqueous metal salt solution.

## Revendications

1. Procédé pour éliminer l'hydrogène sulfuré d'un effluent gazeux par réaction sur du $SO_2$ avec formation de soufre, l'effluent gazeux étant envoyé sur un catalyseur susceptible d'être régénéré et le soufre formé étant absorbé par le catalyseur, caractérisé en ce que l'on utilise comme catalyseur du dioxyde de titane ayant une surface suivant la méthode BET d'au moins 50 $m^2/g$, le catalyseur contenant sous forme d'une imprégnation de 0,3 à 5 % en poids d'au moins l'un des métaux que sont le nickel, le fer ou le cobalt et l'effluent gazeux étant envoyé sur le catalyseur à des températures dans la plage de 30 à 150 °C.

2. Procédé suivant la revendication 1, caractérisé en ce que l'effluent gazeux contient outre $H_2S$ et $SO_2$, du COS en une proportion de 0,01 à 0,5 % en volume qui est transformée sur le catalyseur par hydrolyse en $CO_2$ et en $H_2S$.

3. Procédé suivant la revendication 1 ou 2, caractérisé en ce que le catalyseur contient du nickel à titre d'imprégnation.

4. Procédé suivant la revendication 1 ou l'une des suivantes, caractérisé en ce que le catalyseur chargé de soufre est traité pour la régénération par des gaz inertes à des températures dans la plage allant de 250 à 400 °C.

5. Procédé suivant la revendication 4, caractérisé en ce que l'effluent gazeux épuré est utilisé comme gaz inerte chaud.

6. Procédé suivant la revendication 1 ou l'une des suivantes, caractérisé en ce qu'il consiste à utiliser un catalyseur dont l'imprégnation a été obtenue par une solution aqueuse de sel métallique.